Europäisches Patentamt

European Patent Office

Office européen des brevets

(19)

(11) Publication number: **0 114 583**
**B1**

(12) # EUROPEAN PATENT SPECIFICATION

(45) Date of publication of patent specification: 04.05.88

(51) Int. Cl.⁴: **F 24 D 17/00**

(21) Application number: 83830274.3

(22) Date of filing: 21.12.83

(54) **Device for recovering heat from domestic waste water.**

(30) Priority: 24.12.82 IT 6851582

(43) Date of publication of application:
01.08.84 Bulletin 84/31

(45) Publication of the grant of the patent:
04.05.88 Bulletin 88/18

(84) Designated Contracting States:
DE FR GB NL SE

(56) References cited:
DE-A-2 415 877
DE-A-2 625 157
DE-A-2 845 677
DE-A-3 202 804

(73) Proprietor: INDESIT INDUSTRIA
ELETTRODOMESTICI ITALIANA S.p.A.
Via 1o Maggio No. 8
I-10040 Rivalta Torino (IT)

(72) Inventor: **Siciliano di Rende, Giovanni**
**Viale Lincoln 120**
**I-87100 Caserta (IT)**

(74) Representative: **Quinterno, Giuseppe et al**
**c/o Jacobacci-Casetta & Perani S.p.A. Via Alfieri,**
**17**
**I-10121 Torino (IT)**

Courier Press, Leamington Spa, England.

# Description

The present invention relates to a device of the heat pump type for recovering heat from waste water, comprising a storage tank for the waste water, in which is fitted a heat pump evaporator, a cistern, in which is housed a heat pump condenser and control and display means of the device, in which the water in the storage tank is drained off through an overflow hole.

Devices for recovering heat from domestic waste water are known, in particular devices making use of a heat pump circuit, being substantially formed of a container collecting all waste water and in which the heat pump evaporator is fitted, of a container for storing the hot water in which is fitted the heat pump condenser and of various control, adjustment and display means with relating electrical components.

These devices present several problems, one of which is that of the drainage of the water from the storage tank when said water cannot be utilized conveniently to extract heat. It is known the use of a drainage pump for this purpose (see e.g. the published German patent application DE—A—28 45 677), but when the drainage pump is activated, a part of the evaporator and of the storage tank walls remains uncovered and calcareous and waste deposits stick to said means so that if other water does not flow in for several hours after the pump actioning, said dirt forms a crust on said means greatly worsening the efficiency of the thermal exchange.

There are also problems concerning the user safety, since electricity leakage may occur, as the electric components of the adjustment and control the means are placed in a damp setting.

The main aim of the present invention is therefore that of overcoming said drawbacks and of indicating a device for recovering heat which, in normal operating conditions, drains water without making use of a drain pump, the latter being utilized only under particular conditions and as little as possible. A further aim of the invention is to indicate a recovering heat device presenting no hazards of electric shocks to the user.

With this aim in view, the present invention relates to a device of the heat pump type for recovering heat from waste water, comprising a storage tank for the waste water, in which is fitted a heat pump evaporator, a cistern, in which is housed a heat pump condenser and control and display means of the device, in which the water in the storage tank is drained off through an overflow hole, characterized in that there is provided a drainage pump and sensing means in such a manner that, when in the storage tank is flowing water with a flow greater than that of the overflow hole, said sensing means activate said drainage pump.

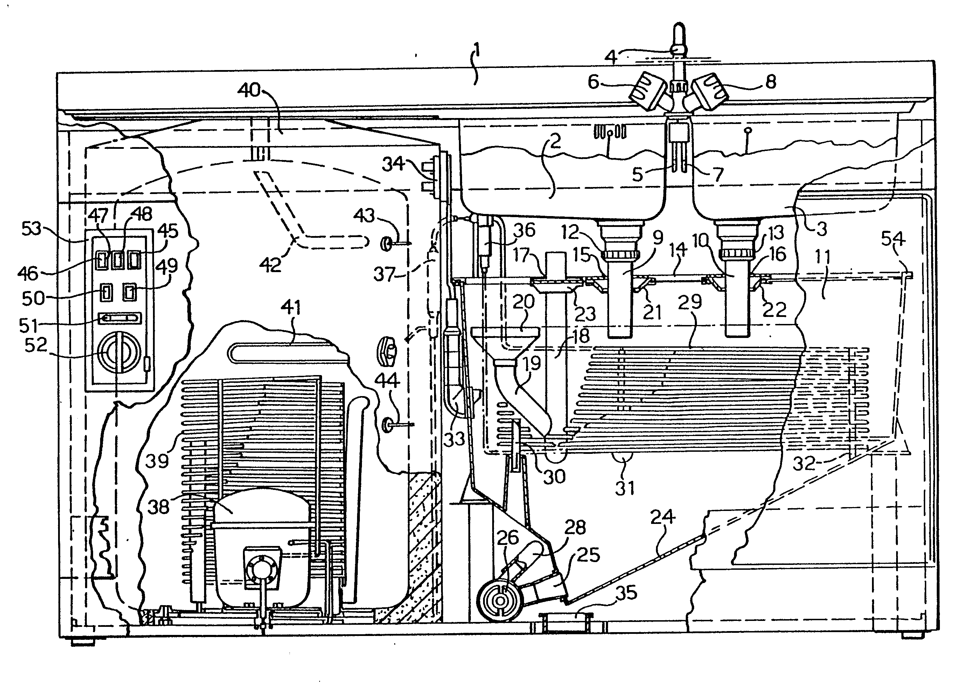

Other purposes and advantages of the present invention will become clear from the following detailed description and the attached drawing.

In the figure an external covering 1 may be noticed, a first sink 2 and a second sink 3 supplied by a pipe 4 to which a hot water pipe is connected, the water flow of which is controlled by a first tap 6 and a cold water pipe 7, the water flow of which is controlled by a second tap 8.

The drainage from the two sinks 2 and 3, by means of a first pipe 9 and a second pipe 10, is conveyed to a storage tank 11 which holds approximately 80 litres and is placed under the two sinks 2 and 3.

Said in-letting pipes 9 and 10 present at their upper side threaded rings 12 and 13 suitable to connect them to the drainage outlets from the sinks 2 and 3 so to be detachable.

The storage tank 11 presents a covering 14 with several holes: a first hole 15 is for the first inlet pipe 9, a second hole 16 is for the second inlet pipe 10, a third hole 17 is for the outlet of a main drainage pipe 18 of the storage tank 11.

In the main drainage pipe 18 ends also a pipe 19 connected to an overflow funnel-shaped hole 20, fitted in the upper part of the storage tank 11, allowing the overflow when the water exceed a given quantity.

The holes 15, 16, 17 are respectively surrounded by sealings 21, 22 and 23 so that the passages of the inlet pipes 9 and 10 and of the main drainage pipe 18 are waterproof.

The storage tank 11 presents also a sloping bottom 24, to the lower end of which there is a suction pipe 25 for a drainage pump in which is housed a filter for solid waste, not visible in the figure, and at the outlet of which is provided a delivery pipe 28 ending in the main drainage pipe 18.

Inside the storage tank 11 are also fitted one evaporator 29, which is part of a heat pump circuit, supported by three supports 30, 31 and 32, which are fixed to the tank bottom 24, the terminal end of an air chamber 33 being part of a pressure switch 34 and the bulb of a thermostat not shown in the figure.

On the covering 14 are provided other holes, also surrounded by sealings and not visible in the figure, for the passage both of inlet pipes from clothes washing or dish washing machines, for the inflow of waste water from said machines in the storage tank 11, and of pipes which are part of the heat pump circuit.

The covering 14 is shaped so that it presents several hollows of different shape so that on it many objects or products usually utilized in a kitchen, such as detergents, sponges, brushes etc. can be lodged.

Moreover it is easily detachable, since only lying on the upper edge of the storage tank 11, and being sufficient to that end to unscrew the threaded rings 12 and 13 and let the pipes 9 and 10 fall on the same covering 14, to allow the internal cleaning of the storage tank 11 and of the evaporator 29 in it fitted, from the waste and calcareous deposits, as a consequence said covering presents along its external perimeter a sealing 54 in order to ensure also in that area a waterproof sealing.

Normally the storage tank is always filled with water, hence when waste water flows in, the excess water, through the overflow hole, outflows in the main drain pipe 18 carrying with it also any grease floating on the surface.

Solid waste of dimensions larger than the filter net that might damage or block the drainage pump 26, are stopped by the same filter and are taken off by removing the filter.

The inlet pipes 9 and 10, like the inlet hoses of clothes or dish washing machines, are as long as to end under the level of the overflow hole 20, so to be always immersed in water, with the double purpose of avoiding gurgles and undesired bad smells which form due to the decomposing of the solid waste and which precisely cannot diffuse through said inlet pipes because of the barrier formed by the water in which the pipes are immersed.

The drainage pump 26 may be started by the user by a manual push button or by the pressure switch 34 set to a pressure corresponding to a water level in the storage tank 11 higher than that of the overflow hole 20, so it starts working either according to a precise command of the user, for example for a manual cleaning, or in "flood" conditions, that is, when the inflowing waste water has a flow greater than that of the overflow hole 20, which alone could not get rid of it, like for example, when the waste water from a dish or clothes washing machine is flowing in.

In this case the drainage pump 26 stops working only when the water in the storage tank 11 reaches a safety level slightly lower than that of the overflow hole 20.

The storage tank 11 is always filled with water and the drainage pump works as little as possible because if it is working and no water flows in, the evaporator 26 (which for reasons of thermic exchange is placed in the upper part of the storage tank 11 because in said part is the hottest water) and the upper part of the walls of the storage tank 11 itself are uncovered, so that if other water does not flow in for several hours (let us say 5 or 6) after the functioning of the drainage pump, the dirt sticking to said parts dries and makes a crust.

The heat pump keeps working, conveying heat from the water in the storage tank, as long as the water temperature approaches 0°C, so that it is possible, especially in summer and in humid-hot climates, that the temperature of the water in the storage tank 11 is of few grades °C, while the temperature and the relative humidity of the external atmosphere are very high.

In these conditions the phenomenon of the cold wall occurs, as a consequence of which on the external walls of the storage tank 11 humidity condenses and then leaks downwards.

In order to avoid leakages on the floor of said condensing water, under the lower part of the storage tank 11 is fitted a collecting vessel 35 in which said condensing water drips.

In order to avoid, that the same phenomenon occur, in a variant, the storage tank walls 11 are insulated so that in the worst working conditions the temperature difference between the external wall of the storage tank 11 and the air of the external setting does not exceed 10°C.

In another variant the unevenness of the external walls of the storage tank 11 can be increased so that the exchange surface between the storage tank 11 itself and the external air is increased and the probability of condensing water on the same walls decreases.

In still another variant the external surfaces of the storage tank can be painted with insulating paints which at the same time increase the unevenness of the surfaces, combining the advantage of a better insulation with that of increased unevenness.

The heating pump circuit comprises also an expansion valve 36, a filter 37, a compressor 38 and a condenser 39.

Compressor 38 and condenser 39 are fitted inside a cistern 40, placed near the storage tank 11, which contains also an electric resistor 41, a pipe for hot water draw 42, a thermostat 43 and a thermometer 44.

Cistern 40 presents on its external wall a control and display panel 53, comprising a general switch 45 housing a warning light, a push button to start the electric resistor 46, a warning light 47 to indicate the connection of the electric resistor 41, a warning light 48 to indicate the operation of compressor 38, a switch 49 for the manual start of drainage pump 26 housing a warning light 50 to indicate the automatic working of drainage pump 26, a thermometer 51 to indicate the temperature of the water in cistern 40 and a knob 52 to regulate the desired temperature of the water in cistern 40.

It may be noticed that all electric components of the device are fitted on the outside of cistern 40, which is waterproof, as previously stated, while in the storage tank 11 there are only the mechanical components of the controlling devices, such as the thermometer and thermostat bulbs or the pressure switch air chamber. In this way it is not to be feared then that the electric components might produce electric shocks to the user because of leakages.

The advantages of the device for recovering heat from waste domestic water according to the present invention will be clear from the description given.

In particular these are represented by the reduction of the drainage pump working time to the minimum, and only when waste water from clothes or dish washing machines is flowing in, so that the storage tank is always filled with water; and represented by the elimination of hazards of electric shocks to the user since all electric components of the device are placed on the cistern, which is waterproof, and on the storage tank in direct contact with the water are only the mechanical components, bulbs and air chambers, of the adjustment, control and display devices.

It is evident to the man skilled in the art that in place of the pressure switch 34 described, electronic detectors of the water level may be used.

## Claims

1. Device of the heat pump type for recovering heat from waste water, comprising a storage tank for the waste water, in which is fitted a heat pump evaporator, a cistern, in which is housed a heat pump condenser and control and display means of the device, in which the water in the storage tank is drained off through an overflow hole, characterized in that there is provided a drainage pump (26) and sensing means (34) in such a manner that, when in the storage tank (11) is flowing water with a flow greater than that of the overflow hole (20), said sensing means activate said drainage pump (26).

2. Device for recovering heat from waste water according to claim 1, characterized in that said sensing means comprise a water level detector (34).

3. Device for recovering heat from waste water according to claim 2, characterized in that said water level detector (34) starts the operation of said drainage pump (26) when a first level threshold is upwardly exceeded, while stopping the operation of said drainage pump (26) when a second level threshold, lower than the first one, is downwardly exceeded.

4. Device for recovering heat from waste water according to claim 3, characterized in that said first level threshold corresponds to a level of said water in the storage tank (11) higher than the level where said overflow hole (20) is located, while said second level threshold corresponds to a level of said water in the storage tank (11) lower than that where said overflow hole (20) is located.

5. Device for recovering heat from waste water according to claim 4, characterized in that said water level detector (34) is a pressure switch.

6. Device for recovering heat from waste water according to any one of the previous claims, characterized in that said evaporator (29) is housed inside said storage tank (11) in such a way that its upper side is under the level where said overflow hole (20) is located and that it is immersed in water.

7. Device for recovering heat from waste water according to claims 4 and 6, characterized in that said second water level, over which said drainage pump (26) is stopped, is chosen so to be higher than the level reached by the upper side of said evaporator (29).

8. Device for recovering heat from waste water according to claim 2, characterized in that said drainage pump (26) can be manually started by the user with the purpose of emptying said storage tank (11) and consent its cleaning.

9. Device for recovering heat from waste water according to claim 1, characterized in that said control and display means have their electric components in that part of the device housing the cistern (40) in order to avoid that water leakage may cause electric shocks.

10. Device for recovering heat from waste water according to claim 9, characterized in that in said storage tank (11) and in said cistern (40) in direct control with the water are only the mechanical components of said control and display means.

## Patentansprüche

1. Vorrichtung vom Wärmepumpentyp zur Wärmerückgewinnung aus Abwasser, die einen Sammelbehälter für das Abwasser, in dem ein Wärmepumpen-Verdampfer eingebaut ist, einen Tank, in dem ein Wärmepumpen-Verdichter untergebracht ist, und eine Steuerungs- und Anzeigeeinrichtung für die Vorrichtung enthält, wobei

das Wasser in dem Sammelbehälter durch ein Überlaufloch abfließen gelassen wird,

dadurch gekennzeichnet,

daß eine Drainagepumpe (26) und eine Sensoreinrichtung (34) derart vorgesehen sind, daß die Sensoreinrichtung die Drainagepumpe (26) aktiviert, wenn Wasser in den Sammelbehälter (11) in größerer Menge als dem Durchfluß des Überlauflochs (20) entsprechend fließt.

2. Vorrichtung zur Wärmerückgewinnung aus Abwasser nach Anspruch 1,

dadurch gekennzeichnet,

daß die Sensoreinrichtung einen Wasserniveau-Detektor (34) aufweist.

3. Vorrichtung zur Wärmerückgewinnung aus Abwasser nach Anspruch 2,

dadurch gekennzeichnet,

daß der Wasserniveau-Detektor (34) den Betrieb der Drainagepumpe (26) auslöst, wenn eine erste Niveauschwelle in Aufwärtsrichtung überschritten ist, während er den Betrieb der Drainagepumpe (26) stoppt, wenn eine zweite Niveauschwelle, die niedriger ist als die erste, in Abwärtsrichtung unterschritten ist.

4. Vorrichtung zur Wärmerückgewinnung aus Abwasser nach Anspruch 3,

dadurch gekennzeichnet,

daß die erste Niveauschwelle einem Wasserniveau im Sammelbehälter (11) entspricht, das höher ist als das Niveau, bei dem das Überlaufloch (20) angeordnet ist, während die zweite Niveauschwelle einem Wasserniveau im Sammelbehälter (11) entspricht, das niedriger ist als das Niveau, bei dem das Überlaufloch (20) angeordnet ist.

5. Vorrichtung zur Wärmerückgewinnung aus Abwasser nach Anspruch 4,

dadurch gekennzeichnet,

daß der Wasserniveau-Detektor (34) ein Druckschalter ist.

6. Vorrichtung zur Wärmerückgewinnung aus Abwasser nach einem der vorhergehenden Ansprüche,

dadurch gekennzeichnet,

daß der Verdampfer (29) innerhalb des Sammelbehälters (11) derart angeordnet ist, daß seine Oberseite sich unter dem Niveau befindet, bei dem das Überlaufloch (20) angeordnet ist, und daß er in das Wasser eingetaucht ist.

7. Vorrichtung zur Wärmerückgewinnung aus Abwasser nach den Ansprüchen 4 und 6,

dadurch gekennzeichnet,

**0 114 583**

daß das zweite Wasserniveau, über welches die Drainagepumpe (26) gestoppt wird, so ausgewählt ist, daß es höher ist als das Niveau, das durch die Oberseite des Verdampfers (29) erreicht wird.

8. Vorrichtung zur Wärmerückgewinnung aus Abwasser nach Anspruch 2,

dadurch gekennzeichnet,

daß die Drainagepumpe (26) durch den Benutzer von Hand zu dem Zweck gestartet werden kann, den Sammelbehälter (11) zu entleeren und seine Reinigung zu ermöglichen.

9. Vorrichtung zur Wärmerückgewinnung aus Abwasser nach Anspruch 1,

dadurch gekennzeichnet,

daß die Steuerungs- und Anzeigeeinrichtung ihre elektrischen Komponenten in dem Bereich der Vorrichtung hat, die den Tank (40) einschließt, um zu verhindern, daß das Auslaufen von Wasser elektrische Schocks verursachen kann.

10. Vorrichtung zur Wärmerückgewinnung aus Abwasser nach Anspruch 9,

dadurch gekennzeichnet,

daß in dem Sammelbehälter (11) und in dem Tank (40) nur die mechanischen Komponenten der Steuerungs- und Anzeigeeinrichtung mit dem Wasser in direkter Kontrolle stehen.

**Revendications**

1. Appareil du type pompe à chaleur pour récupérer la chaleur de l'eau usée, comportant un réservoir de stockage pour l'eau usée, dans lequel est logé un évaporateur de pompe à chaleur, une citerne, dans laquelle est logé un condenseur de pompe à chaleur, ainsi que des moyens de commande et de visualisation de l'appareil, appareil dans lequel l'eau qui se trouve dans le réservoir de stockage est évacuée par l'intermédiaire d'un tube de débordement, caractérisé en ce qu'il est prévu une pompe d'évacuation (26) et des moyens de détection (34) de façon telle que, lorsque de l'eau arrive dans le réservoir de stockage (11) avec un débit supérieur à celui du trou de débordement (20), lesdits moyens de détection activent ladite pompe d'évacuation (26).

2. Appareil pour récupérer la chaleur de l'eau usée selon la revendication 1, caractérisé en ce que lesdits moyens de détection comportent un détecteur (34) du niveau de l'eau.

3. Appareil pour récupérer la chaleur de l'eau usée selon la revendication 2, caractérisé en ce que ledit détecteur (34) du niveau de l'eau démarre le fonctionnement de ladite pompe d'évacuation (26) lorsque l'on dépasse vers le haut un premier seuil de niveau, tout en arrêtant le fonctionnement de ladite pompe d'évacuation (26) lorsque l'on dépasse vers le bas un second seuil de niveau, inférieur au premier.

4. Appareil pour récupérer la chaleur de l'eau usée selon la revendication 3, caractérisé en ce que ledit premier seuil de niveau correspond à un niveau de ladite eau qui se trouve dans le réservoir de stockage (11) supérieur au niveau auquel est situé ledit trou de débordement (20), tandis que ledit second seuil de niveau correspond à un niveau de ladite eau qui se trouve dans le réservoir de stockage (11) inférieur à celui auquel est situé ledit trou de débordement (20).

5. Appareil pour récupérer la chaleur de l'eau usée selon la revendication 4, caractérisé en ce que ledit détecteur (34) du niveau de l'eau est un manostat.

6. Appareil pour récupérer la chaleur de l'eau usée selon l'une quelconque des revendications précédentes, caractérisé en ce que ledit évaporateur (29) est logé à l'intérieur dudit réservoir de stockage (11) de façon telle que sa face supérieure se trouve sous le niveau auquel est situé ledit trou de débordement (20) et qu'elle est immergée dans l'eau.

7. Appareil pour récupérer la chaleur de l'eau usée selon les revendications 4 et 6, caractérisé en ce que l'on choisit ledit second niveau de l'eau, au-dessus duquel on arrête ladite pompe d'évacuation (26), de façon à ce qu'il soit supérieur au niveau atteint par la face supérieure dudit évaporateur (29).

8. Appareil pour récupérer la chaleur de l'eau usée selon la revendication 2, caractérisé en ce que l'utilisateur peut démarrer manuellement ladite pompe d'évacuation (26) dans le but de vider ledit réservoir de stockage (11) et de procéder à son nettoyage.

9. Appareil pour récupérer la chaleur de l'eau usée selon la revendication 1, caractérisé en ce que lesdits moyens de commande et de visualisation ont leur composants électriques dans la partie de l'appareil qui loge la citerne (40) de façon à éviter qu'une fuite d'eau puisse causer des chocs électriques.

10. Appareil pour récupérer la chaleur de l'eau usée selon la revendication 9, caractérisé en ce que seuls les composants mécaniques desdits moyens de commande et de visualisation se trouvent dans ledit réservoir de stockage (11) et dans ladite citerne (40), en contact direct avec l'eau.